# EUROPÄISCHE PATENTSCHRIFT

(11) **EP 2 369 205 B1**
(45) Veröffentlichungstag und Bekanntmachung des Hinweises auf die Patenterteilung: **03.04.2013**
(21) Anmeldenummer: 11152860.0
(22) Anmeldetag: 01.02.2011
(51) Int. Cl.: F16J 15/24, F16J 15/26

(54) **Abstreifanordnung und Kompressor mit einer solchen Abstreifanordnung**
Stripping assembly and compressor with such a stripping assembly
Agencement de démoulage et compresseur doté d'un tel agencement de démoulage

(30) Priorität: 15.02.2010 AT 2162010
(43) Veröffentlichungstag der Anmeldung: 28.09.2011
(73) Patentinhaber: Hoerbiger Kompressortechnik Holding GmbH, 1220 Wien (AT)
(72) Erfinder: Hold, Christian, 2102, Bisamberg (AT); Lindner-Silwester, Tino, 1230, Wien (AT); Lagler, Martin, 1220, Wien (AT)
(74) Vertreter: Weiss, Christian

(56) Entgegenhaltungen:
- CH-A- 290 403
- DE-C- 917 346
- US-A- 3 632 121
- US-A- 4 596 395
- US-A- 4 720 113

## Beschreibung

Die gegenständliche Erfindung betrifft eine Abstreifanordnung mit einem in Umfangsrichtung geteilten Abstreifring und einem in Umfangsrichtung geteilten L-förmigen Deckring, wobei die Teilungsstellen des Deckringes und des Abstreifringes in Umfangsrichtung versetzt zueinander angeordnet sind und der Abstreifring sowohl axial als auch radial in der Ausnehmung des L-förmigen Deckringes anliegend angeordnet ist und einen Kompressor mit einer solchen Abstreifanordnung.

In Kolbenkompressoren befindet sich im Kurbelkasten in der Regel Öl zum Schmieren der beweglichen Teile des Kolbenkompressors. Das Öl gelangt dabei auch auf die Kolbenstange und würde entlang der Kolbenstange bis in den Kompressionsraum transportiert werden, was unerwünscht ist, da dies eine signifikante Ölleckage darstellt und das Öl zum Teil auch mit dem Kompressionsmedium abgeführt wird. Dazu sind im Bereich der Kolbenstange in der Regel in einer Abstreifbuchse sogenannte Abstreifringe vorgesehen, die den Ölfilm auf der Kolbenstange abstreifen sollen. Das abgestreifte Öl wird dann entsprechend abgeführt bzw. rückgeführt.

Ebenso sind in Kolbenkompressoren Dichtvorrichtungen vorgesehen, in der Regel ein Dichtring oder eine Dichtring-Kombination in einer Kammer einer Kammerscheibe, um den Raum mit hohem Druck (Zylinder) gegenüber einem Raum mit niedrigem Druck (Kurbelkasten) abzudichten.

Bisher bekannte Abstreifringe sind, oftmals metallische, radial geschnittene Ringe mit einer scharfen Abstreifkante, die die Kolbenstange in Umfangsrichtung umfasst und berührt. Solche geschnittenen Abstreifringe werden durch eine Umfangsfeder zusammengehalten und durch diese aktiviert, d.h. zur ordnungsgemäßen Funktion des Abstreifringes ist der radiale Anpressdruck der Umfangsfeder erforderlich. Um die radialen Schnitte abzudichten werden häufig zwei radial geschnittene Ringe versetzt zueinander angeordnet. Ebenso sind Anordnungen aus einem radial und einem tangential geschnittenem Abstreifring bekannt. Trotz der versetzten Anordnung der Ringe ergibt sich jedoch ein Leckagepfad entlang der äußeren Umfangsfläche der Ringe, da die radialen Stöße nicht vollkommen dicht sind. Ebenso ergibt sich ein signifikanter Leckagepfad an der inneren Umfangsfläche der Ringe, da die Abstreifringe zur Ausbildung einer Abstreifkante radial innen profiliert sind. Dadurch tritt Öl durch den radialen Spalt des ersten Ringes, das entlang der inneren Umfangsfläche (die ja neben der Abstreifkante nicht an der Kolbenstange anliegt) zum radialen Spalt des nächsten Ringes geführt wird und das dort austritt. Somit sind die radialen Stöße zwar durch die versetzte Anordnung in axialer Richtung abgedichtet, es kommt aber dennoch zu einem Leckagepfad von einem radialen Stoß eines ersten Abstreifring zum radialen Stoß des benachbarten Abstreifring über die äußere und innere Umfangsfläche der benachbarten Abstreifringe. Dasselbe Problem kann im Wesentlichen auch bei einer Kombination von radial und tangential geschnittenem Abstreifring auftreten. Folglich kann bei solchen herkömmlichen Anordnungen die Abstreifkante noch so gut sein und noch so viel Öl von der Kolbenstangeoberfläche entfernen, es wird sich trotzdem immer ein Leckagepfad ergeben, durch den Öl durchtreten kann.

Ein ähnliches Problem tritt bei Dichtanordnungen auf, da solche Dichtanordnungen zur Entfaltung einer Dichtwirkung gasdicht sein müssen und damit Leckagepfade durch die Dichtanordnung vermieden werden müssen.

Ein anderes Problem metallischer Abstreifringe ist darin zu sehen, dass die scharfe Abstreifkante an der Kolbenstange kratzt und diese beschädigen kann. Daher muss die Abstreifkante auch mit sehr exakten Fertigungstoleranzen gefertigt werden, um eine übermäßige Beschädigung der Kolbenstange zu verhindern. Das erhöht aber den Fertigungsaufwand herkömmlicher metallischer Abstreifringe.

Abstreifringe benötigen in der Abstreifbuchse auch axiales Spiel, um ein Klemmen der Abstreifringe in der Abstreifbuchse, was zu einer hohen Leckage führen kann, zu verhindern. Durch das axiale Spiel wird aber bei jedem Hub zwischen axialer Innenseite der Abstreifbuchse und der zugewandten Stirnseite des Abstreifringes ein radialer Spalt geöffnet, durch den Öl ungehindert in die Abstreifbuchse gelangen kann, dessen notwendige rasche Ableitung aus der Abstreifbuchse schwierig ist. Dazu wurde in der EP 1 061 295 A2 bereits vorgesehen einen Drosselring einzusetzen, der durch die wirkende Ölhaftung an der axialen Innenseite der Abstreifbuchse haftet und damit das Eintreten von Öl in die Abstreifbuchse reduziert. Diese Abstreifanordnung verwendet aber nachwievor die herkömmlichen metallischen, radial geschnittenen Abstreifringe mit einer scharfen Abstreifkante, mit allen damit verbundenen und oben erläuterten Problemen. Ein weiteres Problem mit dieser Anordnung liegt darin, dass die radiale Dicke der Abstreifringe möglichst gering sein soll, zwecks besserer Anpassung an der Kolbenstange. Das führt aber dazu, dass die Abstreifringe während der Montage bei ausgebauter Kolbenstange nur sehr schwer auf die Kolbenstange aufgefädelt werden können, da die Abstreifringe radial in die Abstreifbuchse hineinfallen und damit die axialen Bohrungen und die Kolbenstange nicht mehr (auch nicht annähernd) koaxial sind. Weiters kann sich bei einer solchen Anordnung aufgrund der nicht vollständig dichten radialen Stöße ein Leckagepfad entlang der Umfangsfläche des Abstreifringes ausbilden.

Eine andere bekannte Abstreifanordnung nach der US 6 959 930 B2 sieht zwei Abstreifringe und einem Dichtring vor, die in einer Abstreifbuchse axial hintereinander folgend angeordnet sind. Der mittlere Abstreifring und der Dichtring bilden ein herkömmliches radial und tangential geschnittenes Dichtringpaar zur Ausbildung einer Abdichtung entlang der Kolbenstange. Der mittlere Abstreifring vereint somit die Funktion eines Abstreifringes und eines Dichtringes in einem Ring. Der mittlere Abstreifring ist an der äußeren Umfangsfläche V-förmig ausgeführt, wobei in der dadurch entstehenden Einbuchtung eine Umfangsfeder angeordnet wird, die die Abstreif- und Dichtanordnung in axialer Richtung auseinander und damit gegen die Innenseiten der Abstreifbuchse drückt. Der erste Abstreifring funktioniert damit ebenfalls wieder als Drosselring, der ein übermäßiges Eindringen von Öl in die Abstreifbuchse verhindern soll. Ebenfalls soll so sichergestellt werden, dass der mittlere Abstreifring und der Dichtring zur Ausbildung einer Abdichtung auch axial fest aneinander gedrückt werden. Aber auch bei einer solchen Anordnung verbleibt das Problem der scharfkantigen Abstreifkanten und der Ausbildung eines Leckagepfades entlang der äußeren und inneren Umfangsfläche der Ringe.

Abstreifringe sind häufig in irgendeiner Art geteilt ausgeführt, um eine Verschleißnachstellung zu ermöglichen, um eine entstehende Wärmeausdehnung kompensieren zu können, um einfach auf die Kolbenstange montiert werden zu können und um eine gleichmäßige Abstreifwirkung entlang des Umfangs der Kolbenstange gewährleisten zu können. Durch die Teilung des Abstreifringes besteht aber immer die Gefahr der Ausbildung eines Leckagepfades, vor allem entlang der äußeren und inneren Umfangfläche des Abstreifringes wie oben erläutert.

Es gibt aber auch ungeschnittene Abstreifringe. Diese Ringe leiden aber immer unter den Problemen, Verschleiß nicht oder nur beschränkt nachstellen zu können und Wärmeausdehnungen aufgrund unterschiedlicher Wärmeausdehnungskoeffizienten des Materials der Kolbenstange und des Abstreifringes nur unzureichend kompensieren zu können.

Bekannt sind auch Kolbenringanordnungen aus metallischen, L-förmigen Deckringen, in denen Dichtringe aus Metall oder Kunststoff eingesetzt sind. Eine solche Kolbenringanordnung mit in Umfangsrichtung geteilten Deck- und Dichtring, kann z.B. der US 1 822 101 A entnommen werden. Bei solchen Anordnungen wird radial außen gegenüber eine Zylinderwand abgedichtet. Bei der darin gezeigten Kolbenringanordnung werden in den Ringen Öffnungen vorgesehen, um überschüssiges Öl während des Kompressionshubes durch diese Öffnungen aus dem Kompressionsraum in den Kurbelkasten abzuleiten. Damit befindet sich aber immer Öl im Kompressionsraum, was in vielen Fällen jedoch unerwünscht ist, da das Kompressionsmedium das Öl aufnehmen und abtransportieren kann. Ähnliche Kolbenringanordnungen können auch der US 3 632 121 A und der DE 2 323 455 A entnommen werden. Solchen Kolbenringanordnungen ist gemein, dass jeweils der L-förmige Ring unabhängig vom darin angeordneten Ring von der Dichtfläche (hier die Zylinderwand) abheben kann, wodurch eine Abstreifkante gebildet werden kann, die aus Sicht einer minimalen Leckage unerwünscht sein kann. Der DE 917 346 C offenbart eine gattungsgemäße Abstreifanordnung.

Es stellt sich nun die Aufgabe der gegenständlichen Erfindung, eine Abstreifanordnung mit einem geschnittenen Abstreifring und einen Kompressor mit einer solchen Abstreifanordnung anzugeben, bei denen die Auswirkungen der oben angeführten Probleme reduziert sind, also insbesondere Verhinderung der Ausbildung eines Leckagepfades durch die Abstreifanordnung, Verminderung der Gefahr einer oberflächlichen Beschädigung der Kolbenstange durch Kratzen der Abstreifanordnung und Erzielung einer geringen Leckage.

Diese Aufgabe wird erfindungsgemäß durch eine Abstreifanordnung mit einem in Umfangsrichtung geteilten Abstreifring und einem in Umfangsrichtung geteilten L-förmigen Deckring, wobei die Teilungsstellen des Deckringes und des Abstreifringes in Umfangsrichtung versetzt zueinander angeordnet sind und der Abstreifring sowohl axial als auch radial in der Ausnehmung des L-förmigen Deckringes anliegend angeordnet ist und die radial inneren Umfangsflächen des Abstreifringes und des Deckringes eine gemeinsame radial innere Abstreiffläche bilden und die axiale Berührfläche zwischen Abstreifring und Deckring gegenüber einer Senkrechten auf die Abstreiffläche geneigt ist, sodass der Abstreifring in radialer Richtung formschlüssig in der Ausnehmung oder der Deckring in radialer Richtung formschlüssig am Abstreifring gehalten ist, gelöst. Durch die in Umfangsrichtung versetzten Teilungsstellen und durch das Anliegen des Abstreifringes in der Ausnehmung des Deckringes wird die Abstreifanordnung axial abgedichtet. Dadurch, dass der Deckring und der Abstreifring eine gemeinsame Abstreiffläche bilden, kann sich kein Leckagepfad entlang der inneren Umfangsfläche des Abstreifringes bzw. des Deckringes ausbilden, da die Abstreifanordnung an der Kolbenstange anliegt und der Abstreifring über die gesamte Höhe am Deckring anliegt. Die erfindungsgemäße Abstreifanordnung reduziert damit wirkungsvoll unerwünschte Leckage. Gleichzeitig sorgt die Abstreiffläche dafür, dass die Oberfläche der Kolbenstange nicht durch die Abstreifanordnung beschädigt wird. Durch die Neigung der axialen Berührfläche zwischen Abstreifring und Deckring gegenüber einer Senkrechten auf die Abstreiffläche, wird der Abstreifring in radialer Richtung formschlüssig in der Ausnehmung oder der Deckring in radialer Richtung formschlüssig am Abstreifring gehalten, womit sichergestellt wird, dass beim Saughub der Abstreifring mit dem Deckring bzw. der Deckring mit dem Abstreifring angehoben wird und auch beim Saughub Öl von der ölbenetzten Kolbenstange eingezogen werden kann, was wiederum die Leckage verringert.

Vorteilhaft ist am Abstreifring eine Eintrittsfläche vorgesehen, die an die Abstreiffläche anschließt und gegenüber der Abstreiffläche in einem Winkel, vorzugsweise zwischen 40° und 90°, bevorzugt zwischen 50° und 80°, radial nach außen geneigt ist. In diesem Bereich kann sowohl ein ausreichender Ölfilm zur Schmierung der Abstreifanordnung zur Reduzierung des Verschleißes, als auch eine gute Abstreifwirkung der Abstreifanordnung erzielt werden.

Wenn am Deckring eine Einzugsfläche vorgesehen ist, die an die Abstreiffläche anschließt und gegenüber der Abstreiffläche um einen Winkel, vorzugsweise zwischen 2° und 15°, radial nach außen geneigt ist, dann kann vorteilhaft eine Saugwirkung erzeugt werden, die beim auf den Abstreifhub folgenden Saughub der Kolbenstange durch die Abstreifanordnung durchgetretenes, nicht abgestreiftes Öl wieder einzieht, womit die Abstreifwirkung verbessert werden kann.

Um eine radiale Sperre, die ein Hineinfallen der Abstreifanordnung in die Abstreifbuchse verhindern soll, zu realisieren, wird am Deckring bevorzugt eine axial vorstehende Nase und am Abstreifring ein an die Eintrittsfläche anschließender axialer Vorsprung vorgesehen, wobei der Innendurchmesser des axialen Vorsprungs größer, als der Außendurchmesser der Nase ist. Damit kann die Montage der Kolbenstange, die durch die Abstreifanordnung geschoben wird, vereinfacht werden, da die Abstreifanordnung aufgrund dieser radialen Sperre möglichst konzentrisch zur Kolbenstange bleibt.

Mit einer erfindungsgemäßen Abstreifanordnung kann vorteilhaft gleichzeitig eine Dichtwirkung und eine Abstreifwirkung erzielt werden, wenn am Deckring eine Eintrittsfläche vorgesehen ist, die an die Abstreiffläche anschließt und die gegenüber der Abstreiffläche in einem Winkel, vorzugsweise zwischen 40°und 90°, bevorzugt zwischen 50° und 80°, radial nach außen geneigt ist. Eine solche Abstreifanordnung lässt sich besonders gut mit einer anderen Abstreifanordnung in einer Kammer kombinieren, sodass in Richtung zum Kurbelkasten eine Abstreifwirkung und in Richtung zum Zylinderraum eine Dichtwirkung erzielt werden kann. Dazu ist es auch vorteilhaft, wenn am Abstreifring eine Einzugsfläche vorgesehen ist, die an die Abstreiffläche anschließt und die gegenüber der Abstreiffläche um einen Winkel, vorzugsweise zwischen 2° und 15°, radial nach außen geneigt ist. Zur Realisierung einer radialen Sperre kann am Deckring eine axial vorstehende Nase und am Abstreifring stirnseitig eine axiale Ausnehmung vorgesehen sein, wobei die Nase im Falle von axial aneinander liegenden Abstreifanordnungen in die Ausnehmung eingreift.

Wenn die Nase auf einem axialen Vorsprung angeordnet ist, entsteht ein radial frei durchströmbarer Bereich, der verhindert, dass Öl zwischen zwei benachbarten Abstreifanordnungen eingesperrt wird.

Wenn in der Abstreifbuchse ein Vorspannring angeordnet ist, der axial über eine Feder an einer ersten axialen Begrenzungsfläche der Abstreifbuchse und an der benachbarten Abstreifanordnung anliegt kann die Ausbildung eines radialen Spaltes am Eingang zur Abstreifbuchse, und damit eine hohe Leckage durch diesen Spalt, verhindert werden. Dasselbe gilt im Wesentlichen, wenn das Vorspannelement axial zwischen zwei Abstreifanordnungen angeordnet ist.

Die erfindungsgemäße Abstreifanordnung kann besonders vorteilhaft zur Realisierung einer Abstreifwirkung, als auch zur Realisierung einer Dichtwirkung eingesetzt werden, wobei lediglich die Orientierung des Abstreifringes der Abstreifanordnung beachtet werden muss. Zur Erzielung einer Abstreifwirkung ist der Abstreifring der ölführenden Seite zuzuwenden, während der Abstreifring zur Erzielung einer Dichtwirkung der Seite mit dem höheren Druck zuzuwenden ist.

Die gegenständliche Erfindung wird unter Bezugnahme auf die beispielhaften, bevorzugte Ausgestaltungen zeigenden und schematischen Figuren 1 bis 7 erläutert. Dabei zeigt
Fig. 1 einen Schnitt durch eine erfindungsgemäße Abstreifanordnung,
Fig. 2 eine Seitenansicht einer erfindungsgemäßen Abstreifanordnung,
Fig. 3 eine Verwendung einer erfindungsgemäßen Abstreifanordnung in einem Kompressor
Fig. 4 eine Verwendung eines erfindungsgemäßen Abstreifanordnung als Dichtanordnung in einer Dichtvorrichtung eines Kompressor,
Fig. 5 eine Verwendung erfindungsgemäßer Abstreifanordnungen in einer Kammer zur Realisierung einer Abstreif- und einer Dichtwirkung,
Fig. 6 eine perspektivische Ansicht der erfindungsgemäßen Abstreifanordnung und
Fig. 7 eine perspektivische Ansicht eines Vorspannelements.

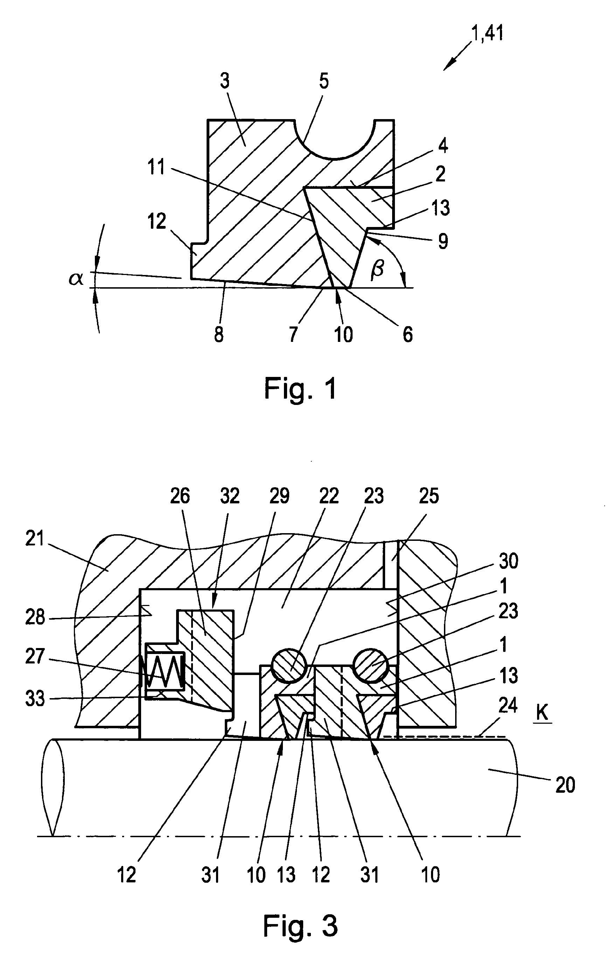

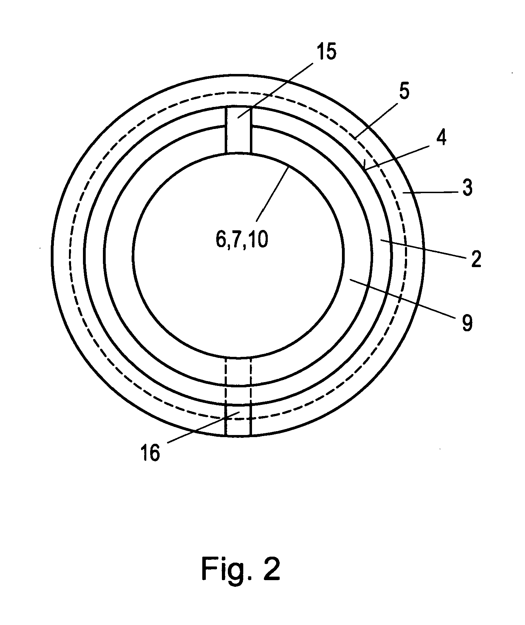

Eine erfindungsgemäße Abstreifanordnung 1 ist in vorteilhafter Ausgestaltung in Fig. 1, 2 und 6 dargestellt. Diese Abstreifanordnung 1 besteht aus einem in Umfangsrichtung geteilten Abstreifring 2 und einem in Umfangsrichtung geteilten L-förmigen Deckring 3. Abstreifring 2 und Deckring 3 sind vorteilhaft an einer oder mehreren Stellen radial geschnitten und sind bevorzugt aus einem Kunststoff, eventuell aus unterschiedlichen Materialen bzw. Kunststoffen, gefertigt. Der radiale Spalt 15 in Umfangsrichtung im Abstreifring 2 und der radiale Spalt 16 in Umfangsrichtung im Deckring 3, wie in Fig. 2 dargestellt, sind dabei in Umfangsrichtung versetzt zueinander angeordnet (hier um 180°). Die Teilung in Umfangsrichtung könnte aber genauso irgendwie anders ausgestaltet sein, wie z.B. tangential oder in Form eines Schlosses. Im Deckring 3 ist an der radial äußeren Umfangsfläche eine Ausnehmung 5 zur Aufnahme einer Umfangsfeder vorgesehen.

Der Abstreifring 2 ist in der Ausnehmung 4 des L-förmigen Deckringes 3 angeordnet, sodass der Abstreifring 2 sowohl axial, als auch radial an den Innenflächen der Ausnehmung 4 anliegt. Die radial innere Umfangsfläche 6 des Abstreifringes 2 und die radial innere Umfangsfläche 7 des Deckringes 3 bilden eine gemeinsame Abstreiffläche 10, die im betriebsgemäßen Einsatz an der Kolbenstange anliegt. Oder in anderen Worten teilt die axiale Berührfläche 11 zwischen Abstreifring 2 und Deckring 3 die Abstreiffläche 10 in zwei Teilflächen 6, 7. Die erfindungsgemäße Abstreifanordnung 1 hat daher keine scharfe Abstreifkante wie herkömmliche Abstreifringe, sondern eine Abstreiffläche 10, womit die Abstreifanordnung mit einer größeren Fläche aufliegt und das Problem des Kratzens an der Kolbenstangeoberfläche reduziert wird. Die Abstreiffläche 10 wird dabei bevorzugt zwischen 0,5 und 1,5mm breit gemacht. Im bestimmungsgemäße Einsatz als Abstreifanordnung 1 ist der Abstreifring 2 immer der ölbenetzten Seite der Kolbenstange zugewandt.

Diese Anordnung hat aber noch eine andere entscheidende Funktion. Da der Abstreifring 2 sowohl radial, als auch axial und über den ganzen Umfang (bis auf den Spalt 15) in der Ausnehmung 4 vollflächig anliegt und da die innere Umfangsfläche 7 des Deckringes 3 einen Teil der Abstreiffläche 10 bildet, kann sich kein Leckagepfad durch die Abstreifanordnung 1 ausbilden. Der Spalt 15 im Abstreifring 2 ist axial und radial durch den Deckring 3 über die gesamte Höhe des Abstreifringes 2 vollständig abgedeckt.

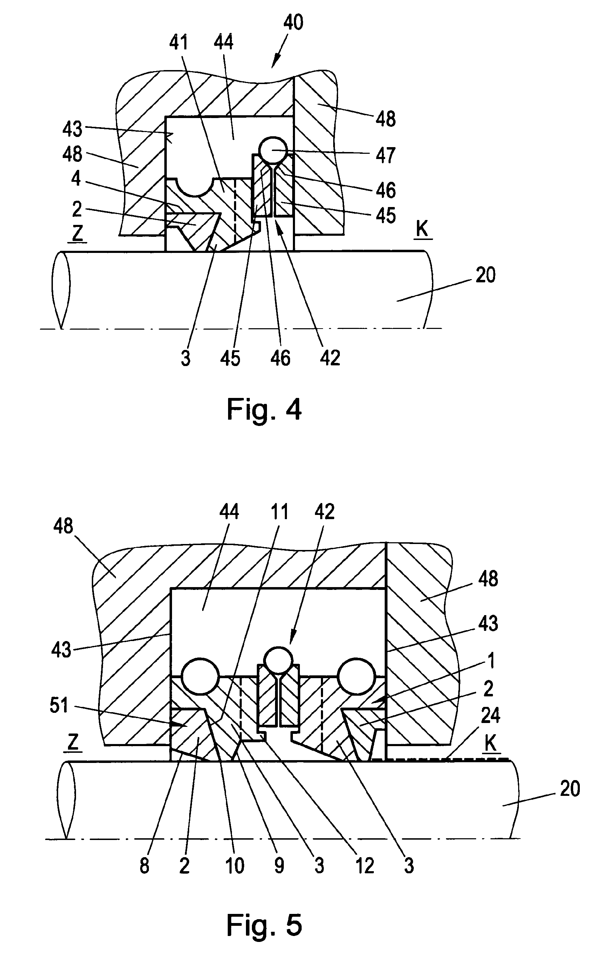

Diese Abstreifanordnung 1 ist damit sogar gasdicht und kann auch als Dichtanordnung eingesetzt werden, wenn der in der Ausnehmung 4 anliegende Abstreifring 2 dem Raum mit dem abzudichtenden hohen Druck zugewandt angeordnet wird, wie weiter unten unter Bezugnahme auf die Figuren 4 und 5 anhand konkreter Ausführungsbeispiele noch eingehend ausgeführt wird.

Am Abstreifring 2 ist eine Eintrittsfläche 9 vorgesehen, die an die Abstreiffläche 10 anschließt und abschnittsweise die Stirnfläche des Abstreifringes 2 bildet. Die Eintrittsfläche 9 ist in einem Winkel β gegenüber der Abstreiffläche 10 radial nach außen geneigt. Der Winkel β liegt bevorzugt zwischen 40° und 90°, ganz besonders vorteilhaft zwischen 50° und 80°, um eine möglichst steile Anstellung der Eintrittsfläche 9 zu erhalten, da festgestellt wurde, dass die Abstreifwirkung bei einer steilen Anstellung der Eintrittsfläche 9 besser ist. Der Winkel β wird dabei als Kompromiss zwischen dem Wunsch einer möglichst guten Abstreifwirkung (d.h. möglichst steiler Winkel) und des Verbleibs eines ausreichend dicken Ölfilms auf der Kolbenstange (d.h. Vorsehen eines flacheren Winkels), um sicherzustellen, dass die Abstreifanordnung 1 auf einem Ölfilm läuft und so nicht verschleißt, eingestellt. Dieser Kompromiss kann innerhalb des oben angeführten Bereichs des Winkels β erzielt werden. Im Bereich des Spalts 15 im Abstreifring 2 übernimmt der Deckring 3 die Funktion der Eintrittsfläche.

Am Deckring 3 ist eine Einzugsfläche 8 vorgesehen, die an die Abstreiffläche 10 anschließt, abschnittsweise die Stirnfläche des Deckringes 3 bildet und gegenüber der Abstreiffläche 10 um einen Winkel α radial nach außen geneigt ist. Der Winkel α ist bevorzugt zwischen 2° und 15°, um eine möglichst flache Anstellung der Einzugsfläche 8 zu erhalten. Durch die flache Einzugsfläche 8 wird erreicht, dass an der Kolbenstange während des dem Abstreifhub folgenden Saughubes haften bleibendes Öl, das von der Abstreifanordnung 1 nicht abgestreift wird, beim folgenden Saughub wieder eingezogen wird, sodass die immer vorhandene Leckage entlang der Kolbenstange vermindert wird.

Unter Abstreifhub wird hier die Bewegung der Kolbenstange 20 verstanden, bei der Öl von der Kolbenstange 20 abgestreift wird, während als Saughub die entgegengesetzte Bewegung der Kolbenstange 20 bezeichnet wird.

Die Berührfläche 11 zwischen Abstreifring 2 und Deckring 3 ist vorteilhaft in einem Winkel gegenüber einer Senkrechten auf die Abstreiffläche 10 geneigt, sodass der Abstreifring 2 in radialer Richtung formschlüssig in der Ausnehmung 4 bzw. im Deckring 3 gehalten wird. Die axiale Begrenzungsfläche der Ausnehmung 4 im Deckring 3 ist entsprechend komplementär geformt. Aufgrund der ölbenetzten Kolbenstange (nicht 100%-ige Abstreifwirkung, gewünschte Schmierung durch Ölfilm) wird der Deckring 3 beim Saughub aufgrund der flachen Einzugsfläche 8 leicht angehoben. Durch den formschlüssigen Halt des Abstreifringes 2 im Deckring 3 wird damit auch gleichzeitig der Abstreifring 2 angehoben und das Öl kann wirkungsvoll eingezogen werden. Würde der Abstreifring 2 nicht mitabgehoben, wie z.B. bei einem Schnitt von 90° zur Kolbenstange oder einer Neigung in die andere Richtung, würde der Abstreifring 2 beim Saughub eine Abstreifkante ausbilden, die das Einziehen des Öles verhindern würde.

Am Deckring 3 ist hier am radial inneren Bereich an einer Stirnfläche weiters eine axial herausragende Nase 12 vorgesehen. Am Abstreifring 2 ist an einer Stirnfläche an die Eintrittsfläche 9 anschließend und mit einem größeren Innenmesser als der Außendurchmesser der Nase 12 ein axialer Vorsprung 13 vorgesehen, der mit der Nase 12 einer benachbarten Abstreifanordnung 1 wie weiter unten ausgeführt zusammenwirkt.

In Fig. 3 ist ein Teil eines Kompressors mit einer hin- und hergehenden Kolbenstange 20 dargestellt. In einem Teil des Kompressorgehäuses 21 bzw. in einer hinlänglich bekannten Kammerscheibe, ist eine Abstreifbuchse 22 vorgesehen, in der zumindest eine erfindungsgemäße Abstreifanordnung 1 angeordnet ist. In der dargestellten Ausgestaltung sind zwei Abstreifanordnungen 1 axial hintereinander und axial aneinander liegend angeordnet. Die Abstreifanordnungen 1 liegen jeweils mit ihrer Abstreiffläche 10 an der Kolbenstange 20 an. Die Abstreifanordnungen 1 werden jeweils durch eine Umfangsfeder 23 aktiviert. Um axiales Spiel der Abstreifanordnungen 1 in der Abstreifbuchse 22 auszugleichen ist ein Vorspannelement 32, hier in Form eines Vorspannringes 26, vorgesehen, der über eine in einer Ausnehmung 33 angeordneten Feder 27 (oder mehrere über den Umfang verteilte Federn 27) axial an der ersten axialen Begrenzungsfläche 28 der Abstreifbuchse 22 und über seine der Abstreifanordnung 1 zugewandten Stirnfläche 29 an der Abstreifanordnung 1 anliegt. Über die Federvorspannung werden die Abstreifanordnungen 1 gegen die zweite axiale Begrenzungsfläche 30 gedrückt und dichten somit radial ab. Damit kann kein Öl zwischen Abstreifbuchse 22 und zweiter Begrenzungsfläche 30 in die Abstreifbuchse 22 gelangen.

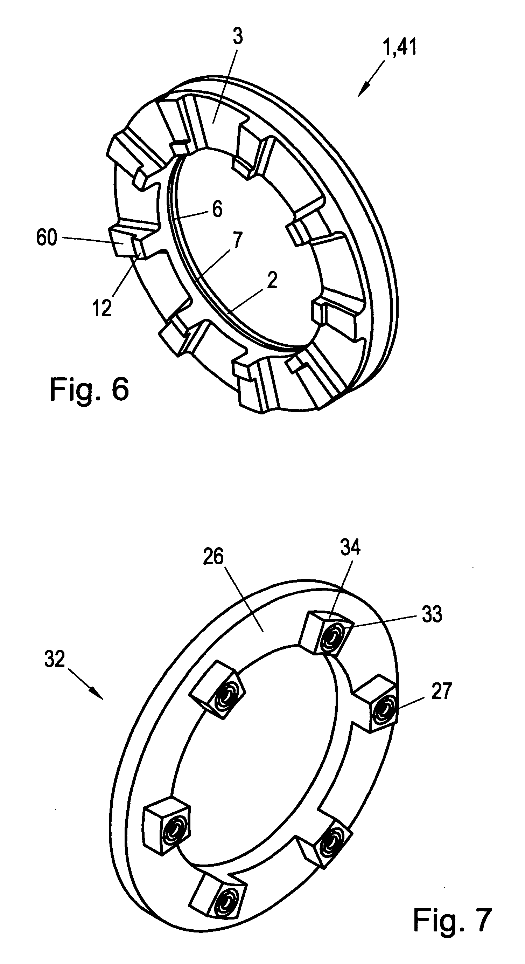

Die axialen Ausnehmungen 33 zur Aufnahme der Feder 27 am Vorspannring 26 können auch in axialen Vorsprüngen 34 vorgesehen sein, um zwischen den Vorsprüngen 34 einen radial frei durchströmbaren Bereich zu schaffen, wie in Fig. 6 dargestellt, um zu verhindern, dass Öl zwischen Vorspannring 26 und Kolbenstange 20 eingesperrt wird, sondern über diesen frei durchströmbaren Bereich in die Abstreifbuchse 22 gelangen kann, von wo es durch die Abführöffnungen 25 wegtransportiert werden kann. Ebenso können die Nasen 12 auf axialen Vorsprüngen 60 am Deckring 3 angeordnet sein, um zwischen den Vorsprüngen 60 einen radial frei durchströmbaren Bereich zu schaffen, wie in Fig. 5 dargestellt, um zu verhindern, dass Öl zwischen zwei benachbarten Abstreifanordnungen 1 bzw. zwischen Abstreifanordnung und Vorspannelement 32 eingesperrt wird, sondern über diesen frei durchströmbaren Bereich in die Abstreifbuchse 22 gelangen kann, von wo es durch die Abführöffnungen 25 wegtransportiert werden kann.

Es kann aber auch ein beliebig anderes Vorspannelement 32, 42 eingesetzt werden, das geeignet ist, die Abstreifanordnung 1 gegen die axiale Begrenzungsfläche 30 zu drücken. Z.B. könnte als Vorspannelement 32, 42 auch nur eine Feder im Kompressorgehäuse 21, bzw. in einer die Abstreifbuchse 22 bildende Kammerscheibe, vorgesehen sein, womit überhaupt auf einen Vorspannring 26 verzichtet werden könnte.

Die Nase 12 und der Vorsprung 13 der benachbarten Abstreifanordnungen 1 bilden eine radiale Sperre, die verhindert, dass die Abstreifanordnung 1 radial in die Abstreifbuchse 22 fällt, was die Montage der Kolbenstange 20, die durch die Abstreifanordnung 1 geschoben wird, erleichtert. Dazu greift der Vorspannring 26 radial außerhalb der Nase 12 an der benachbarten Abstreifanordnung 1 an, womit sich diese Abstreifanordnung 1 über die Nase 12 radial am Vorspannring 26 abstützt und verhindert wird, dass die dem Vorspannring 26 zugewandte Abstreifanordnung 1 bei entfernter Kolbenstange 20 radial in die Abstreifbuchse 22 fällt.

Ein Ölfilm 24 auf der Kolbenstange 20 wird durch die am Eintritt der Abstreifbuchse 22 angeordnete Abstreifanordnung 1 abgestreift. Das zwischen Abstreifanordnung 1 und Kolbenstange 20 trotzdem durchtretende und durch die Einzugswirkung nicht mehr eingezogenes Öl wird von der nachfolgenden Abstreifanordnung 1 abgestreift. Um das sich zwischen den beiden Abstreifanordnungen 1 ansammelnde Öl abzuführen, ist an der rückseitigen Stirnfläche des Deckringes 3 einer Abstreifanordnung 1 eine (oder mehrere, über den Umfang verteilte) radiale Ausnehmung 31 vorgesehen (wie in Fig. 6 ersichtlich), durch die das Öl in die Abstreifbuchse 22 gelangt, von wo es durch eine Abführöffnung 25 abtransportiert wird.

Aufgrund der Gasdichtheit der Abstreifanordnung 1 kann diese auch in einer Dichtvorrichtung 40 als Dichtanordnung 41 zur Abdichtung der Kolbenstange 20 eingesetzt werden (anstelle oder zusätzlich zu einem bekannten Dichtring, wie z.B. ein segmentierter Dichtring, oder einer bekannten Dichtring-Kombination, wie z.B. aus radial und tangential geschnittenen Ringen). In einer solchen in einer Kammer 44 einer Kammerscheibe 48 angeordneten Dichtvorrichtung 41, wie in Fig. 4 dargestellt, wäre der in der Ausnehmung 4 des Deckringes 3 angeordnete Abstreifring 2 der Dichtanordnung 41 immer der abzudichtenden Seite mit dem hohen Druck zugewandt angeordnet, beim Kompressor also z.B. in Richtung Zylinderraum Z. In einer solchen Dichtvorrichtung 40 kann auch ein Vorspannelement 42 vorgesehen sein, dass die Dichtanordnung 41 gegen die axiale Begrenzungsfläche 43 der Kammer 44 drückt. Das Vorspannelement 42 umfasst hier zwei Vorspannringe 45 mit jeweils einer Abschrägung 46 an der radial äußeren Umfangsfläche. Die beiden Vorspannringe 45 sind mit zueinander gewandten Abschrägungen 46 axial benachbart angeordnet. In der durch die beiden Abschrägungen 46 entstehenden Umfangsnut ist eine Ringfeder 47 angeordnet, die die beiden Vorspannringe 45 aufgrund der Abschrägungen 46 auseinanderdrückt und die Dichtanordnung 41 damit gegen die Begrenzungsfläche 43 drückt.

Es ist aber auch möglich eine Abstreifanordnung 1 und eine Dichtanordnung 51 in einer Kammer 44 bzw. einer Abstreifbuchse 22 zu kombinieren, wie in Fig. 5 dargestellt, um sowohl in Richtung zum Zylinderraum Z (Seite mit dem hohen Druck) abzudichten, als auch in Richtung zum Kurbelkasten K eine Abstreifanordnung zu schaffen. In der Kammer 44 einer Kammerscheibe 48 ist an der dem Kurbelkasten zugewandten Seite eine Abstreifanordnung 1 angeordnet, die Öl von der ölbenetzten Kolbenstange 20 entfernt, wie oben beschrieben. Am zylinderseitigen Ende Z der Kammer 44 ist eine als Dichtanordnung 51 eingesetzte erfindungsgemäße Abstreifanordnung 1 vorgesehen. Axial dazwischen ist wieder ein Vorspannelement 42, wie oben beschrieben, vorgesehen, das die Dichtanordnung 51 und die Abstreifanordnung 1 axial auseinander und gegen die axialen Begrenzungsflächen 43 der Kammer 44 drückt. Dabei ist am Deckring 3 die Eintrittsfläche 9 und am Abstreifring 2 die Einzugsfläche 8 vorgesehen, wobei der Abstreifring 2 zur Ausbildung der Dichtwirkung dem Raum mit dem hohen Druck, hier dem Zylinderraum Z, zugewandt angeordnet ist. Die Berührfläche 11 zwischen Abstreifring 2 und Deckring 3 ist hier gegenüber einer Senkrechten auf die Abstreiffläche 10 derart geneigt, dass der Deckring 3 in radialer Richtung formschlüssig am Abstreifring 2 gehalten wird und dadurch eine Abhebebewegung des Abstreifringes 2 von der Kolbenstange 20, bedingt durch das Einziehen von Öl an der Einzugsfläche 8 während des Saughubes, mitmacht. Die Dichtanordnung 41 in dieser Ausgestaltung realisiert dabei eine Dichtwirkung zur Seite mit dem hohen Druck und gleichzeitig eine Abstreifwirkung in die entgegengesetzte Seite. Selbstverständlich könnten wieder mehrere Dichtanordnungen 51 oder mehrere Abstreifanordnungen 1 axial nebeneinander anliegend vorgesehen sein. In diesem Fall könnte am Abstreifring 2 stirnseitig eine axiale Ausnehmung vorgesehen sein, um mit einer Nase 12 der benachbarten Dichtanordnung 51 wieder eine radiale Sperre zu bilden, indem die Nase 12 axial in die Ausnehmung eingreift. Diese Dichtanordnung 51 könnte aber auch in einer Anordnung nach Fig. 4 anstelle der dortigen Dichtanordnung 41 eingesetzt werden.

Die Abstreifanordnung 1 könnte aber auch als Dichtelement in einer Dichtanordnung zur Abdichtung einer hin- und hergehenden Kolbenstange eines Kolbenkompressors wie in der österreichischen Patentanmeldung A39/2009 beschrieben eingesetzt werden, wobei der Abstreifring 2 der Abstreifanordnung 1 in einer solchen Dichtanordnung dem Raum mit dem Dichtmedium (Seite mit dem hohen Druck) zugewandt angeordnet wäre.

Obwohl die Abstreifanordnung 1 nur im Zusammenhang mit geschnittenen Ringen beschrieben wurde, sei hier erwähnt, dass eine solche Abstreifanordnung 1 auch mit ungeschnittenen Ringen ausgeführt sein könnte.

## Patentansprüche

1. Abstreifanordnung mit einem in Umfangsrichtung geteilten Abstreifring (2) und einem in Umfangsrichtung geteilten L-förmigen Deckring (3), wobei die Teilungsstellen (16, 15) des Deckringes (3) und des Abstreifringes (2) in Umfangsrichtung versetzt zueinander angeordnet sind und der Abstreifring (2) sowohl axial als auch radial in der Ausnehmung (4) des L-förmigen Deckringes (3) anliegend angeordnet ist, wobei die radial inneren Umfangsflächen (6, 7) des Abstreifringes (2) und des Deckringes (3) eine gemeinsame radial innere Abstreiffläche (10) bilden, **dadurch gekennzeichnet, dass** die axiale Berührfläche (11) zwischen Abstreifring (2) und Deckring (3) gegenüber einer Senkrechten auf die Abstreiffläche (10) geneigt ist, sodass der Abstreifring (2) in radialer Richtung formschlüssig in der Ausnehmung (4) oder der Deckring (2) in radialer Richtung formschlüssig am Abstreifring (2) gehalten ist.

2. Abstreifanordnung nach Anspruch 1, **dadurch gekennzeichnet, dass** am Abstreifring (2) eine Eintrittsfläche (9) vorgesehen ist, die an die Abstreiffläche (10) anschließt und die gegenüber der Abstreiffläche (10) in einem Winkel (β), vorzugsweise zwischen 40°und 90°, bevorzugt zwischen 50° und 80°, radial nach außen geneigt ist.

3. Abstreifanordnung nach Anspruch 1 oder 2, **dadurch gekennzeichnet, dass** am Deckring (3) eine Einzugsfläche (8) vorgesehen ist, die an die Abstreiffläche (10) anschließt und die gegenüber der Abstreiffläche (10) um einen Winkel (α), vorzugsweise zwischen 2° und 15°, radial nach außen geneigt ist.

4. Abstreifanordnung nach Anspruch 2 oder 3, **dadurch gekennzeichnet, dass** am Deckring (3) eine axial vorstehende Nase (12) und am Abstreifring (2) ein an die Eintrittsfläche (9) anschließender axialer Vorsprung (13) vorgesehen ist, wobei der Innendurchmesser des axialen Vorsprungs (13) größer ist, als der Außendurchmesser der Nase (12).

5. Abstreifanordnung nach Anspruch 1, **dadurch gekennzeichnet, dass** am Deckring (3) eine Eintrittsfläche (9) vorgesehen ist, die an die Abstreiffläche (10) anschließt und die gegenüber der Abstreiffläche (10) in einem Winkel (β), vorzugsweise zwischen 40°und 90°, bevorzugt zwischen 50° und 80°, radial nach außen geneigt ist.

6. Abstreifanordnung nach Anspruch 1 oder 5, **dadurch gekennzeichnet, dass** am Abstreifring (2) eine Einzugsfläche (8) vorgesehen ist, die an die Abstreiffläche (10) anschließt und die gegenüber der Abstreiffläche (10) um einen Winkel (α), vorzugsweise zwischen 2° und 15°, radial nach außen geneigt ist.

7. Abstreifanordnung nach Anspruch 5 oder 6, **dadurch gekennzeichnet, dass** am Deckring (3) eine axial vorstehende Nase (12) und am Abstreifring (2) stirnseitig eine axiale Ausnehmung vorgesehen ist, wobei die Nase (12) im Falle von axial aneinander liegenden Abstreifanordnungen in die Ausnehmung eingreift.

8. Abstreifanordnung nach Anspruch 4 oder 7, **dadurch gekennzeichnet, dass** die Nase (12) auf einem axialen Vorsprung (60) angeordnet ist.

9. Kompressor mit einer hin- und hergehenden Kolbenstange (20) und einer Abstreifbuchse (22) in einem Teil des Kompressorgehäuses (21), in der eine Abstreifanordnung (1) nach einem der Ansprüche 1 bis 8 angeordnet ist.

10. Kompressor nach Anspruch 9, **dadurch gekennzeichnet, dass** der Abstreifring (2) der Abstreifanordnung (1) zur Realisierung einer Abstreifwirkung der ölbenetzten Seite der Kolbenstange (20) zugewandt angeordnet ist.

11. Kompressor nach Anspruch 9, **dadurch gekennzeichnet, dass** die Abstreifanordnung (1) als Dichtanordnung (41, 51) verwendet wird, wobei der Abstreifring (2) der Dichtanordnung (41, 51) zur Realisierung einer Dichtwirkung der Seite mit dem hohen Druck zugewandt angeordnet ist.

12. Kompressor nach einem der Ansprüche 9 bis 11, **dadurch gekennzeichnet, dass** in der Abstreifbuchse (22) mehrere axial aneinander liegende Abstreifanordnungen (1) bzw. Dichtanordnungen (41, 51) angeordnet sind.

13. Kompressor nach einem der Ansprüche 9 bis 12, **dadurch gekennzeichnet, dass** in der Abstreifbuchse (22) ein Vorspannelement (32, 42) angeordnet ist, das die Abstreifanordnung (1) bzw. die Dichtanordnung (41, 51) axial gegen eine axiale Begrenzungsfläche (23, 43) der Abstreifbuchse (22) drückt.

14. Kompressor nach Anspruch 10, 11 und 12, **dadurch gekennzeichnet, dass** in einer Kammer (44) eine Abstreifanordnung (1) und eine Dichtanordnung (51) angeordnet sind, wobei axial zwischen der Abstreifanordnung (1) und der Dichtanordnung (51) ein Vorspannelement (42) angeordnet ist, das die Abstreifanordnung (1) und die Dichtanordnung (51) gegen eine axiale Begrenzungsfläche (43) der Kammer (44) drückt.

## Claims

1. A wiper arrangement with a wiper ring (2) which is split in the circumferential direction and an L-shaped cover ring (3) which is split in the circumferential direction, wherein the splitting points (16, 15) of the cover ring (3) and the wiper ring (2) are arranged offset to each other in the circumferential direction and the wiper ring (2) is arranged abutting axially as well as radially in the recess (4) of the L-shaped cover ring (3), at which the radially inner circumferential surfaces (6, 7) of the wiper ring (2) and the cover ring (3) form a common radially inner wiping surface (10) **characterized in that** the axial contact surface (11) between wiper ring (2) and cover ring (3) is inclined with respect to a vertical to the wiping surface (10) so that the wiper ring (2) is retained in a positive-locking manner in the radial direction in the recess (4)or the cover ring (3) in a positive-locking manner in the radial direction on the wiper ring (2).

2. The wiper arrangement according to claim 1, **characterized in that** on the wiper ring (2), an entrance surface (9) is provided which is adjacent to the wiping surface (10) and which is inclined radially outwardly at an angle (β), preferably between 40° and 90°, preferred between 50° and 80°, with respect to the wiping surface (10).

3. The wiper arrangement according to claim 1 or claim 2, **characterized in that** on the cover ring (3) an intake surface (8) is provided which is adjacent to the wiping surface (10) and which is inclined radially outwardly at an angle (α), preferably between 2° and 15°, with respect to the wiping surface (10).

4. The wiper arrangement according to claim 2 or claim 3, **characterized in that** on the cover ring (3), an axially projecting nose (12) is provided and on the wiper ring (2), an axial projection (13) adjacent to the entrance surface (9) is provided, wherein the inner diameter of the axial projection (13) is larger than the outer diameter of the nose (12).

5. The wiper arrangement according to claim 1, **characterized in that** on the cover ring (3), an entrance surface (9) is provided which is adjacent to the wiping surface (10) and which is inclined radially outwardly at an angle (β), preferably between 40° and 90°, preferred between 50° and 80°, with respect to the wiping surface (10).

6. The wiper arrangement according to claim 1 or claim 5, **characterized in that** on the wiper ring (2) an intake surface (8) is provided which is adjacent to the wiping surface (10) and which is inclined radially outwardly at an angle (α), preferably between 2° and 15°, with respect to the wiping surface (10).

7. The wiper arrangement according to claim 5 or claim 6, **characterized in that** on the cover ring (3), an axially projecting nose (12) is provided and on the wiper ring (2), an axial recess is provided on the front side, wherein in the case of axially abutting wiper arrangements, the nose (12) engages with the recess.

8. The wiper arrangement according to claim 4 or claim 7, **characterized in that** the nose (12) is arranged on an axial projection (60).

9. A compressor with a reciprocating piston rod (20) and a wiper bush (22) in a part of the compressor housing (21), in which wiper bush, a wiper arrangement (1) according to any one of the claims 1 to 8 is arranged.

10. The compressor according to claim 9, **characterized in that** for implementing a wiping effect, the wiper ring (2) of the wiper arrangement (1) is arranged facing the oil-wetted side of the piston rod (20).

11. The compressor according to claim 9, **characterized in that** the wiper arrangement (1) is used as sealing arrangement (41, 51), wherein for implementing a sealing effect, the wiper ring (2) of the sealing arrangement (41, 51) is arranged facing the side with the high pressure.

12. The compressor according to any one of the claims 9 to 11, **characterized in that** in the wiper bush (22), a plurality of wiper arrangements (1) or sealing arrangements (41, 51) axially abutting against each other is arranged.

13. The compressor according to any one of the claims 9 to 12, **characterized in that** in the wiper bush (22), a pretensioning element (32, 42) is arranged which presses the wiper arrangement (1) or the sealing arrangement (41, 51) axially against an axial boundary surface (23, 43) of the wiper bush (22).

14. The compressor according to the claims 10, 11 and 12, **characterized in that** in a chamber (44), a wiper arrangement (1) and a sealing arrangement (51) are arranged, wherein axially between the wiper arrangement (1) and the sealing arrangement (51), a pretensioning element (42) is arranged which presses the wiper arrangement (1) and the sealing arrangement (51) against an axial boundary surface (43) of the chamber (44).

## Revendications

1. Agencement de raclage comportant une bague de raclage (2) subdivisée dans la direction de la circonférence et une bague de couverture (3) en forme de L, subdivisée dans la direction de la circonférence, dans lequel les points de division (16, 15) de la bague de couverture (3) et de la bague de raclage (2) sont disposés de manière décalée l'un par rapport à l'autre dans la direction de la circonférence, dans lequel la bague de raclage (2) est disposée en reposant aussi bien axialement que radialement dans le décrochement (4) de la bague de couverture (3) en forme de L et dans lequel les surfaces périphériques radialement intérieures (6, 7) de la bague de raclage (2) et de la bague de couverture (3) forment une surface de raclage (10) radialement intérieure commune, **caractérisé par le fait que** la surface axiale de contact (11) entre la bague de raclage (2) et la bague de couverture (3) est inclinée par rapport à une perpendiculaire à la surface de raclage (10), de telle sorte que la bague de raclage (2) est maintenue par accouplement de formes dans la direction radiale dans le décrochement (4) ou que la bague de couverture (3) est maintenue par accouplement de formes dans la direction radiale sur la bague de raclage (2).

2. Agencement de raclage selon la revendication 1, **caractérisé par le fait qu'**il est prévu, sur la bague de raclage (2), une surface d'entrée (9) qui prolonge la surface de raclage (10) et qui est inclinée radialement vers l'extérieur par rapport à la surface de raclage (10) d'un angle (β), de préférence entre 40° et 90°, plus préférentiellement entre 50° et 80°.

3. Agencement de raclage selon l'une des revendications 1 ou 2, **caractérisé par le fait qu'**il est prévu, sur la bague de couverture (3), une surface d'alimentation (8) qui prolonge la surface de raclage (10) et qui est inclinée radialement vers l'extérieur, par rapport à la surface de raclage (10), d'un angle (α), de préférence entre 2° et 15°.

4. Agencement de raclage selon l'une des revendications 2 ou 3, **caractérisé par le fait que**, sur la bague de couverture (3), est prévu un talon (12) faisant saillie dans la direction axiale, et, sur la bague de raclage (2), une saillie axiale (13) qui prolonge la surface d'entrée (9), le diamètre intérieur de la saillie axiale (13) étant supérieur au diamètre extérieur du talon (12).

5. Agencement de raclage selon la revendication 1, **caractérisé par le fait qu'**il est prévu, sur la bague de couverture (3), une surface d'entrée (9) qui prolonge la surface de raclage (10) et qui est inclinée radialement vers l'extérieur par rapport à la surface de raclage (10) d'un angle (β) , de préférence entre 40 ° et 90 ° , plus préférentiellement entre 50° et 80°.

6. Agencement de raclage selon l'une des revendications 1 ou 5, **caractérisé par le fait qu'**il est prévu, sur la bague de raclage (2), une surface d'alimentation (8) qui prolonge la surface de raclage (10) et qui est inclinée radialement vers l'extérieur par rapport à la surface de raclage (10) d'un angle (α) , de préférence entre 2° et 15°.

7. Agencement de raclage selon l'une des revendications 5 ou 6, **caractérisé par le fait qu'**il est prévu, sur la bague de couverture (3), un talon (12) faisant saillie dans la direction axiale et, sur la bague de raclage (2), côté face, un logement axial, le talon (12) s'engageant dans le logement en cas d'agencements de raclage qui reposent les uns sur les autres dans la direction axiale.

8. Agencement de raclage selon l'une des revendications 4 ou 7, **caractérisé par le fait que** le talon (12) est disposé sur une saillie axiale (60).

9. Compresseur comportant une tige de piston (20) se déplaçant en va-et-vient et une douille de raclage (22) dans une partie du corps de compresseur (21), dans lequel est monté un agencement de raclage (1) selon l'une des revendications 1 à 8.

10. Compresseur selon la revendication 9, **caractérisé par le fait que**, pour obtenir un effet de raclage, la bague de raclage (2) de l'agencement de raclage (1) est disposée tournée vers le côté de la tige de piston (20) qui est baigné dans l'huile.

11. Compresseur selon la revendication 9, **caractérisé par le fait que** l'agencement de raclage (1) est utilisé comme agencement d'étanchéité (41, 51), dans lequel, pour obtenir un effet d'étanchéité, la bague de raclage (2) de l'agencement d'étanchéité (41, 51) est disposée tournée vers le côté sous haute pression.

12. Compresseur selon l'une des revendications 9 à 11, **caractérisé par le fait que**, dans la douille de raclage (22), sont disposés plusieurs agencements de raclage (1) ou agencements d'étanchéité (41, 51) juxtaposés dans la direction axiale.

13. Compresseur selon l'une des revendications 9 à 12, **caractérisé par le fait que**, dans la douille de raclage (22), est disposé un élément de précontrainte (32, 42) qui pousse l'agencement de raclage (1) ou l'agencement d'étanchéité (41, 51) dans la direction axiale contre une surface de délimitation axiale (23, 43) de la douille de raclage (22).

14. Compresseur selon l'une des revendications 10, 11 et 12, **caractérisé par le fait qu'**un agencement de raclage (1) et un agencement d'étanchéité (51) sont disposés dans une chambre (44), un élément de précontrainte (42) étant disposé axialement entre l'agencement de raclage (1) et l'agencement d'étanchéité (51) et poussant l'agencement de raclage (1) et l'agencement d'étanchéité (51) contre une surface de délimitation axiale (43) de la chambre (44).
